Europäisches Patentamt

European Patent Office

Office européen des brevets

(19)

(11) Veröffentlichungsnummer : **0 069 076**
**B1**

(12)                    EUROPÄISCHE PATENTSCHRIFT

(45) Veröffentlichungstag der Patentschrift :
17.07.85

(51) Int. Cl.⁴ : **B 29 C 67/20, A 63 C 15/05**

(21) Anmeldenummer : 82810273.1

(22) Anmeldetag : 24.06.82

(54) **Verfahren zur Herstellung eines Verbundkörpers mit einem Kunststoff-Hartschaumkern und einer Tragschicht aus hartem Kunststoffschaum höherer Dichte.**

(30) Priorität : 30.06.81 CH 4306/81

(43) Veröffentlichungstag der Anmeldung :
05.01.83 Patentblatt 83/01

(45) Bekanntmachung des Hinweises auf die Patenterteilung : 17.07.85 Patentblatt 85/29

(84) Benannte Vertragsstaaten :
AT CH DE FR GB IT LI NL

(56) Entgegenhaltungen :
DE-A- 1 917 271
DE-A- 2 512 152
FR-A- 2 181 917
FR-A- 2 422 898
GB-A-   978 164
GB-A- 1 575 243

(73) Patentinhaber : CIBA-GEIGY AG
Postfach
CH-4002 Basel (CH)

(72) Erfinder : Schmitter, André, Dr.
Rue des Alpes 7
F-68220 Hégenheim (FR)

EP 0 069 076 B1

0 069 076

**Beschreibung**

Die Erfindung betrifft ein Verfahren gemäss Oberbegriff von Patentanspruch 1.

Bei Verbundkörpern mit Leichtkern und Tragschicht wird stets eine möglichst hohe Festigkeit bei möglichst geringem Gewicht angestrebt. Naturgemäss verringern sich alle Festigkeitswerte (Biegefestigkeit, Druckfestigkeit usw.) von Schaumstoffkörpern mit sinkender Dichte. So weist z. B. Styropor P (BASF) bei einem Raumgewicht von 100 g/l eine Biegefestigkeit von 11 bis 19 kg/cm$^2$ und bei einem Raumgewicht von 20 g/l eine solche von 2 bis 3 kg/cm$^2$ auf. Die anderen Festigkeitswerte verhalten sich ähnlich. Die mechanische Festigkeit des Verbundkörpers ist daher im wesentlichen durch die Festigkeit der Tragschicht bestimmt.

Verbundkörper, bei denen sowohl der Leichtkern als auch die Tragschicht aus Kunststoff-Hartschaum bestehen, letztere aus wesentlich dichterem und mechanisch festerem Material, haben gegenüber solchen, deren Tragschicht aus kompaktem Material besteht, wesentliche Vorteile. Der Hauptvorteil besteht darin, dass bei gleicher Festigkeit eine Gewichtsersparnis von bis zu 30 % und darüber erzielbar ist, oder bei gleichem Gewicht die Festigkeit entsprechend höher liegt.

Die Qualität jedes Verbundkörpers ist vor allem durch die Festigkeit der Schichtenverbindung bestimmt und damit überwiegend herstellungstechnisch bedingt. Die damit zusammenhängenden Probleme konnten bei der Verbindung eines sehr leichten Kunststoff-Hartschaums mit einer Tragschicht aus kompaktem oder geschäumten Hartkunststoff bislang nicht befriedigend gelöst werden.

Die Verbundprobleme wachsen mit der Grösse des Verbundkörpers. So ist jedem Hersteller von Kunststoff-Windsurfbrettern des Leichtschaum/Kompaktmantel-Typs bekannt, dass Kerne aus einem Material mit kapillarer Struktur, wie z. B. Polystyrol-Partikelschaum, vor dem Aufbringen der die Trag- und Schutzschicht bildenden flüssigen Harz-Härtermischung versiegelt werden müssen. Es hat sich nämlich gezeigt, dass andernfalls zuviel Harz-Härtergemisch in den Kern eindringt, wodurch sich das Gewicht des Verbundkörpers nachteiligerweise sehr stark erhöht. Der an sich als Kernmaterial sehr beliebte Polystyrol-Partikelschaum ist bekanntlich ein Thermoplast. Wenn zuviel reaktive Ueberzugsmasse in einen solchen Kern eindringt, dann bringt diese Masse infolge ihrer Exothermie den Kern zumindest partiell zum Schmelzen. Der hergestellte Verbundkörper ist unbrauchbar. Dies ist ein weiterer wesentlicher Grund für die vorangehende Versiegelung des Kernes.

Trotz der Versiegelung der Kernoberfläche vor dem Ueberziehen kann durch die Exothermie der Ueberzugsmasse der Kern an Stellen mit Vertiefungen, bedingt durch normale Unebenheiten der Kernoberfläche, beschädigt werden, da sich dort grössere Mengen des exothermen Harz/Härter-Gemisches ansammeln.

Die Versiegelung des Kernes vor dem Ueberziehen verhindert das Eindringen von Ueberzugsmasse in den Kern. Damit wird zwar in der Regel sowohl eine nachteilige Gewichtserhöhung des Verbundkörpers als auch eine Beschädigung des Kernes durch die Exothermie der Ueberzugsmasse verhindert. Gleichzeitig wird dadurch aber auch die Festigkeit der Verbindung zwischen Kern und Tragschicht nachteilig beeinflusst.

Aufgrund dieser Erfahrungen ist man bei der Herstellung von Windsurfbrettern oder dergleichen Schwimmkörpern dazu übergegangen, entweder den vorgefertigten Kern durch relativ aufwendige Verfahren mit harzgetränkten Glasgeweben zu beschichten, oder den Kern nachträglich in die vorgefertigte Umhüllung einzuspritzen. Verfahren der erstgenannten Art sind beispielsweise in den DE-A-2 512 152 und 2 905 701 beschrieben, ein solches der zweitgenannten Art in der CH-A-612 590.

Die Verfahren mit nachträglicher Ausschäumung der vorgefertigten Schale gehen zumeist von zwei Halbschalen mit nach innen vorstehenden Randflanschen aus. Diese beiden Schalen werden entweder mit den Flanschen zusammengeklebt oder durch die Kernmasse zusammengehalten. Die zweite Möglichkeit ist aus der CH-A-612 590 bekannt. Gemäss dieser Patentschrift werden die Halbschalen vor dem Zusammenbau innen mit Sprühschaum (Polyurethan) beschichtet. Diese Schaumschicht bildet die Tragschicht. Die anschliessend eingebrachte leichte Kernmasse hält die Halbschalen zusammen. Die Verbindung zwischen Tragschicht und Kern entspricht dem üblichen Standard und kann daher höheren Anforderungen nicht genügen.

Durch die Erfindung soll ein Verbundkörper mit optimaler Festigkeit der Verbindung der Hartschaumschichten geschaffen werden.

Die gestellte Aufgabe wird verfahrenstechnisch durch die im Anspruchs 1 angeführten Massnahmen gelöst. Vorteilhafte Verfahrensvarianten sind in den Ansprüchen 2 bis 9 beschrieben.

Im folgenden wird die Erfindung anhand der Zeichnungen näher erläutert ; es zeigen :

Figur 1 einen Schnitt durch ein Ausführungsbeispiel eines erfindungsgemäss hergestellten Körpers,

Figuren 2a bis 2f die wesentlichen Stufen einer Variante des erfindungsgemässen Herstellungsverfahrens in kleinerem Massstab,

Figur 3 ein aus Halbschalen gebildetes Formwerkzeug im Schnitt,

Figur 4 einen Schnitt längs der Linie IV-IV der Fig. 3.

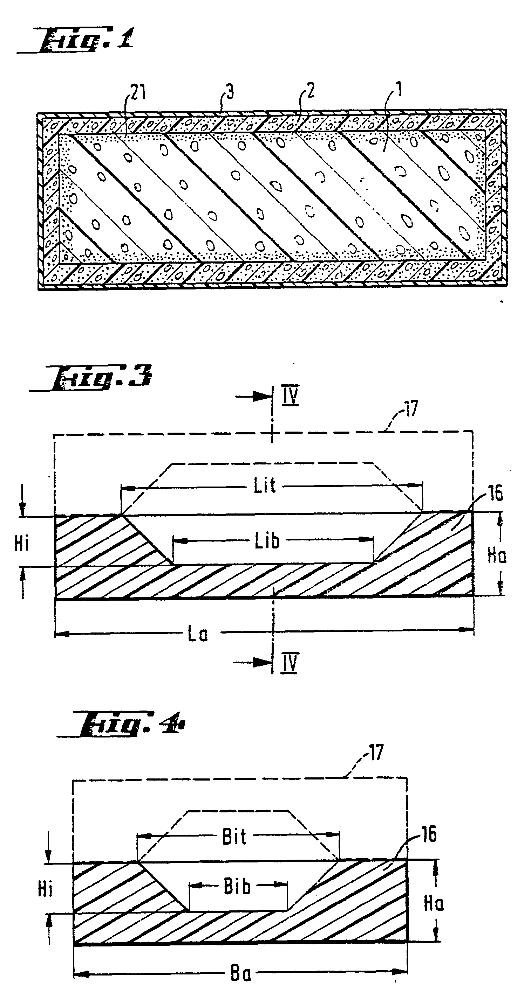

Der in Fig. 1 im Schnitt gezeigte Körper besteht aus einem Hartschaum-Kern 1, einer Hartschaum-Tragschicht 2 und einer kompakten (nicht geschäumten) Deck- oder Ueberzugsschicht 3.

2

Der Kern 1 besteht aus niederdichtem Schaumstoff mit kapillarer Struktur, insbesondere Polystyrol-Partikel-Schaumstoff, vernetztem oder unvernetztem Polyäthylen-Partikel-Schaumstoff, Polyurethan-Schaumstoff oder Epoxy-Schaumstoff niederer Dichte. Die Dichte der gewählten Kernmaterialien liegt im Bereich von 0,01 bis 0,10 g/cm$^3$.

Die Tragschicht 2 besteht, verglichen mit dem Kern 1, aus wesentlich dichterem Schaumstoff höherer Festigkeit, vorzugsweise aus physikalisch oder chemisch getriebenem Epoxy-Schaumstoff oder Polyurethan-Schaumstoff mittlerer Dichte. Die Dichte der Tragschicht-Schaumstoffe liegt im Bereich von etwa 0,10 bis 0,90 g/cm$^3$, vorzugsweise 0,10 bis 0,50 g/cm$^3$. Die Schaumstoff-Tragschicht 2 kann durch Faser- und/oder Gewebeeinlagen verstärkt sein.

Als für den Aufbau der Tragschicht idealer Werkstoff hat sich chemisch getriebener Epoxydharz-Schaumstoff erwiesen. Das an sich bekannte Epoxydharz-Schaumstoff-System zeichnet sich durch mehrere Eigenschaften aus, welche es für den erfindungsgemässen Einsatz besonders geeignet machen. Zu den wichtigsten dieser Eigenschaften zählen das gleichmässige Aufschäumen, die gute Benetzung der Kontaktflächen, die relativ spät eintretende Gelierung, die geringe Druckentwicklung, die gute Fliessfähigkeit und die niedrige Exothermiespitze. Diese herstellungstechnischen Vorteile wirken sich entscheidend auf die Qualität des Verbundkörpers aus.

Der für den vorliegenden Anwendungsfall ideale Tragschichtdichtenbereich von etwa 0,15 bis 0,50 g/cm$^3$ kann mit Epoxydharz-Schaumstoff-Systemen gut reproduzierbar erreicht werden.

Die Deckschicht 3 kann praktisch aus beliebigem Material bestehen, wobei die Auswahl gemäss den für den jeweiligen Verwendungszweck erforderlichen mechanischen Eigenschaften und dem Preis erfolgen kann. Beispielsweise können als Aussenschicht ein Kunstharzlack, Kunststoff-Folien, Laminate aus Polyester, Acrylharzen oder Epoxydharzen verwendet werden. Ferner Polymerisat-Platten aus Polystyrol, Acrylonitril, Acrylnitril-Butadien-Styrol oder Polycarbonat. Schliesslich können auch Stahl- oder Aluminiumblech usw. verwendet werden. Falls die Deckschicht 3 aus Kunststoff besteht, kann sie durch Faser- und/oder Gewebeeinlagen verstärkt sein.

Besonders bei der Anwendung einer Tragschicht aus chemisch getriebenem Epoxydharz-Schaumstoff besteht sowohl in der Wahl des Kernwerkstoffes als auch derjenigen des Deckschichtwerkstoffes eine sehr grosse Freizügigkeit. Der Epoxydharz-Schaumstoff verbindet die meisten Werkstoffe problemlos fest miteinander. Dies ist vor allem auf die sehr guten Fliesseigenschaften des Epoxydharz-Schaumstoff-Systems zurückzuführen, da infolge dieser Eigenschaft, z. B. bei dem weiter unten beschriebenen Herstellungsverfahren, die miteinander zu verbindenden Flächen, insbesondere auch die Aussenschicht mit noch nicht geliertem Schaum zuverlässig benetzt werden.

Der chemisch getriebene Epoxydharz-Schaumstoff dringt insbesondere infolge seiner guten Fliessfähigkeit in die kapillare Struktur des Kernes ein. Die Eindringzone ist in Fig. 1 mit 21 bezeichnet. Diese Zone bewirkt die optimale mechanische Verbindung zwischen Kern 1 und Tragschicht 2. Die Eindringtiefe beträgt z. B. bei einem erfindungsgemäss hergestellten Schwimmkörper eines Windsurfers ca. 2 bis 30 Millimeter.

Das Herstellungsverfahren geht von einem vorgefertigten sehr leichten Hartschaum-Kern mit kapillarer Struktur aus und benützt eine Giessform, die um die gewünschte Tragschichtdicke grösser ist als dieser Kern.

Der vorgefertigte Kern 1, z. B. aus Polystyrol-Partikel-Schaum ist in Fig. 2a gezeigt, die Giessform in den Fig. 2b und 2bb. Die Giessform besteht aus einem wannenartigen Unterteil 10 und einem Deckel 11. In den Unterteil 10 mündet eine Leitung 12 mit einem Absperrventil 13. Der Deckel 11 ist mit einer mit einem Absperrventil 15 versehenen Entlüftung 14 ausgestattet und am Unterteil 10 dicht fixierbar.

Nach Einlegen des vorgefertigten Kernes 1 in den Unterteil 10 der Giessform wird diese mittels des Deckels 11 geschlossen und vorerhitzt. Diese Phase ist in Fig. 2c gezeigt.

Nun werden die Ventile 15 und 13 geöffnet und durch die Leitung 12 die zur Bildung der Tragschicht bestimmte Schaumstoffmasse in noch ungeschäumtem flüssigem Zustand in die geschlossene Giessform eingespeist. Hierbei entweicht die Luft durch die Leitung 14. Der wesentlich leichtere Kern schwimmt auf der flüssigen Tragschichtmasse. Diese Phase ist in Fig. 2d skizziert, wobei die noch flüssige Tragschichtmasse mit 2f und deren Niveau mit 2n bezeichnet sind.

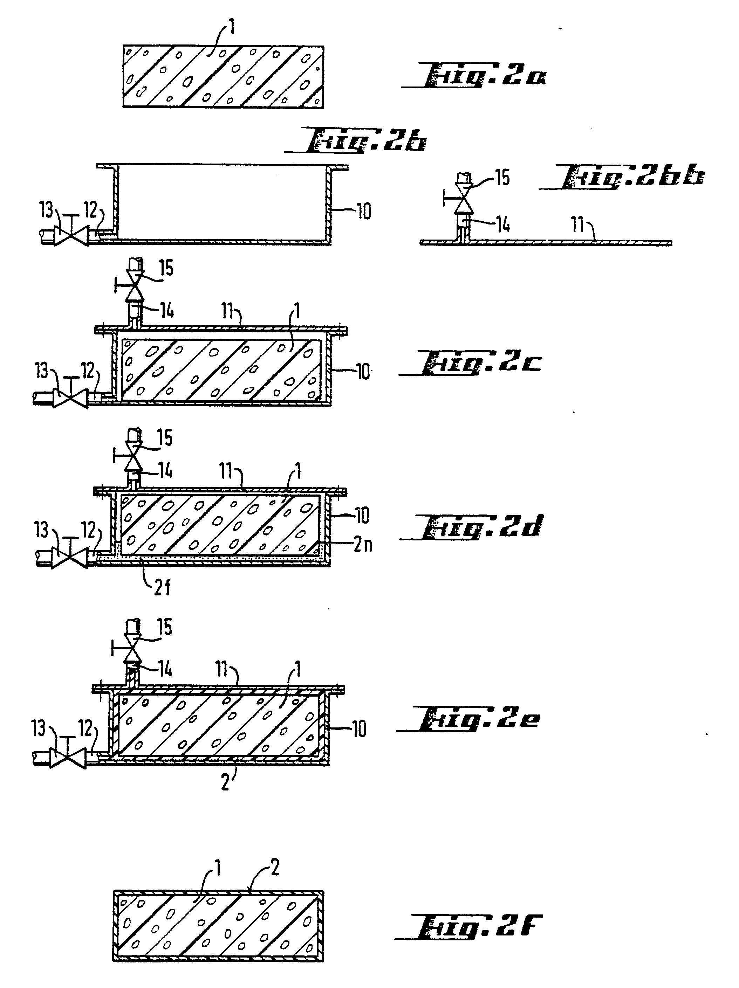

Sobald die vorausbestimmte Menge Tragschichtmasse eingefüllt bzw. das Niveau 2n erreicht ist, wird das Ventil 13 geschlossen. Das Aufschäumen der Tragschichtmasse beginnt beim Einfüllen bzw. daran anschliessend. Sobald über die noch immer offene Leitung 14 Schaumstoff austritt wird diese bzw. das Ventil 15 geschlossen. Das Ende der Aufschäumphase ist in Fig. 2e gezeigt. Die Giessform wird während der gesamten Aufschäum- und Härtungsphase auf Härtungstemperatur gehalten.

Nach Beendigung der Aufschäum- und Verfestigungsphase wird die Giessform durch Abnahme des Deckels 11 geöffnet und der nunmehr mit der Schaumstoff-Tragschicht 2 ummantelte Körper 1/2 entnommen. Dieser Körper, welcher in Fig. 2f gezeigt ist, kann erforderlichenfalls mit einer kompakten Deckschicht versehen werden, wodurch der in Fig. 1 in grösserem Massstab dargestellte Körper entsteht.

Das vorstehend beschriebene Verfahren kann vorteilhafterweise auch derart modifiziert werden, dass die flüssige Tragschichtmasse vor dem Kern in den unteren Teil der Giessform (von oben) eingefüllt und die Giessform vor dem Aufschäumen dieser Masse geschlossen wird. Die Tragschichtmasse kann auch auf den Kern appliziert und dieser anschliessend in die Form gelegt werden. Schliesslich kann ein Teil der Tragschichtmasse auf den Kern appliziert und der andere Teil in die Giessform gefüllt werden. Bei allen

3

diesen Modifikationen sind die Leitungen 12 und 14 mit den Ventilen 13 und 15 überflüssig.

Eine weitere wichtige Variante des in den Fig. 2a bis 2f gezeigten Herstellungsverfahren besteht darin, dass die Giessform 10/11 mit der Deckschicht identisch ist. Dabei entfällt dann selbstverständlich die Entformung. Vorzugsweise wird bei dieser Variante ohne die Leitungen 12 und 14 gearbeitet und die Tragschichtmasse vor dem Einbringen des Kernes in den Giessformunterteil eingefüllt und/oder vorher auf den Kern appliziert. Der Verbundkörper ist daher nach dem Aufschäumen und Verfestigen der Tragschichtmasse fertig. Andernfalls müssten noch nach der in Fig. 2e gezeigten Phase die Leitungen 12 und 14 entfernt (abgeschnitten) und der Ueberzug dort geschlossen (ausgebessert) werden.

Verbundkörper gemäss der vorliegenden Erfindung mit dickeren Tragschichten (Dicke grösser als 5 mm) können auf sehr ähnliche Weise hergestellt werden. Der Kern 1 muss lediglich in der Giessform 10/11 durch geeignete Abstandshalter positioniert werden. Im übrigen können auch alle vorstehend erwähnten Varianten zur Anwendung gelangen.

Das Volumen der zur Bildung der Tragschicht bestimmten Schaumstoffmasse wird so festgelegt, dass es um das etwa 1,2 bis 10-fache (Ueberfüllungsfaktor) grösser ist als die Volumendifferenz zwischen Giessform-Hohlraum und dem Hartschaumkern dividiert durch den Schäumungsfaktor. Durch diesen Ueberfüllungsfaktor ist sichergestellt, dass der Spalt zwischen Giessform und Kern stets vollständig ausgeschäumt wird und ein Teil der Masse in den Kern eindringt. Der Schäumungsfaktor ist definiert durch das Verhältnis des Volumens der frei, das heisst bei Atmosphärendruck geschäumten Masse zu demjenigen der ungeschäumten Masse. Die Schaumstoffmasse wird insbesondere durch die Art und Menge des Treibmittels so eingestellt, dass der Schäumungsfaktor 1,5 bis 30, vorzugsweise 3 bis 10 beträgt.

In den folgenden Beispielen sind weitere bevorzugte Herstellungsbeispiele insbesondere materialmässig detaillierter beschrieben.

Die Beispiele 1 und 2 wurden mit Hilfe eines aus zwei gleichen Halbschalen zusammensetzbaren Formwerkzeug durchgeführt. Eine dieser Halbschalen 16 ist in den Fig. 3 und 4 in zwei zueinander senkrechten Schnitten dargestellt. Die zweite, identische Halbschale 17 ist, wie strichliert angedeutet, nach Art eines Deckels auf die erste Halbschale 16 setzbar. Danach sind die beiden Halbschalen 16 und 17 mittels an sich bekannter Mittel, z. B. Schraubzwingen (nicht dargestellt), fest miteinander verbindbar. Sie bilden dann eine geschlossene dichte Form. Die Halbschalen bestehen vorzugsweise aus Epoxy-Werkzeugharz.

Für die in den folgenden Beispielen 1 und 2 ausführlicher beschriebenen Herstellungsverfahren wurden Halbschalen mit den folgenden Abmessungen verwendet :

| | |
|---|---|
| Aussenlänge | La = 30 cm |
| Aussenbreite | Ba = 24 cm |
| Aussenhöhe | Ha = 5 cm |
| Innenlänge an der Trennfuge | Lit = 23,8 cm |
| Innenlänge am Boden | Lib = 17,8 cm |
| Innenbreite an der Trennfuge | Bit = 18 cm |
| Innenbreite am Boden | Bib = 11,8 cm |
| Innenhöhe | Hi = 2,8 cm |

### Beispiel 1

a) Auf die Wände der Hohlräume der beiden Halbschalen (16, 17) wurde ein Trennmittel auf Wachsbasis aufgetragen.

b) Beide Halbschalen (16, 17) wurden mit einem Glasgewebe mit einem Gewicht von 470 g/m² ausgelegt.

c) Die in den Halbschalen (16, 17) befindlichen Glasgewebe wurden mit einer Mischung bestehend aus 30 g ungesättigtem Polyester und 0,6 g Butanox imprägniert.

d) Die mit dem imprägnierten Gewebe ausgelegten Halbschalen wurden in einen Umluftofen eingebracht und die Imprägniermasse dort bei einer Temperatur von 40 °C ca. 3 Stunden gehärtet.

e) Aus einem Stück handelsüblichem Polystyrol-Partikel-Hartschaumstoff mit einer Dichte von 0,014 g/cm³ wurde mit einer Bandsäge ein Stück etwa mit den folgenden Abmessungen (mit Spiel in die Halbschalen passend) herausgeschnitten :

Höhe = 5,4 cm
Länge oben und unten (Lib) = 17 cm
Länge in der Mitte (Lit) = 22,4 cm
Breite oben und unten (Bib) = 11,2 cm
Breite in der Mitte (Bit) = 16,4 cm.

Der herausgeschnittene Körper wog 23,3 g.

f) Es wurden 100 g der folgenden Mischung zubereitet : 100 Gewichtsteile (GWT) Epoxydharz-Gemisch auf der Basis von epoxydiertem Bisphenol A und epoxydiertem Polypropylenglycol, 0,2 GWT Silikonöl (oberflächenaktive Substanz), 3 GWT eines Treibmittels auf der Basis von Polysiloxan mit aktiven Wasserstoffatomen und 50 GWT Härter basierend auf einem Gemisch von Polyaminen und Polyamiden. Die Mischung wurde mittels eines Schnellrührers während ca. 1 min intensiv gerührt. Der Schäumungsfaktor dieser Masse betrug 7,35.

g) Die mit dem imprägnierten Gewebe ausgelegten Halbschalen wurden auf ca. 50 °C erhitzt.

h) In die untere erhitzte Halbschale (16) wurden 40 g des gemäss f) erzeugten Gemisches eingegossen.

i) Der Kern wurde in die untere Halbschale (16) eingelegt.

j) 40 g des gemäss f) erzeugten Gemisches wurden auf den Kern gegossen.

k) Die obere erhitzte Halbschale (17) wurde auf die untere (mit dem Kern) gelegt und die beiden Halbschalen wurden fest miteinander verbunden. Der Ueberfüllungsfaktor betrug ca. 2,9.

1) Die in der geschlossenen Form befindliche Schaumstoffmasse (f) wurde 4 Stunden lang bei 50 °C gehärtet.

m) Der Formkörper wurde entformt.

Der entformte Formkörper wog 186 g. Der Zwischenraum zwischen dem Polystyrolkern und dem die Deckschicht bildenden Polyesterlaminat (gehärtetes Imprägnierharz mit Glasgewebe) war vollständig mit dem gehärteten Epoxydharz-Schaumstoff (Tragschicht) ausgefüllt.

## Beispiel 2

a) Aus einem Stück handelsüblichem Polystyrol-Partikel-Hartschaumstoff mit der Dichte 0,015 g/cm³ wurde ein Stück mit etwa denselben Abmessungen wie in Beispiel 1/e angegeben herausgeschnitten. Der Körper wog 22 g.

b) In die auf etwa 50 °C erhitzte untere Halbschale (16) wurden 50 g einer gemäss Beispiel 1/f hergestellten Epoxydharz-Schaumstoffmasse (Schäumungsfaktor 7,35) eingegossen.

c) Unmittelbar nach Beendigung des Eingiessens wurde der Polystyrol-Partikel-Schaum-Kern (a) in die untere Halbschale (16) eingelegt.

d) Auf den eingelegten Kern wurden unverzüglich 50 g derselben Schaumstoffmasse wie in Beispiel 1/f angegeben aufgegossen.

e) Die untere Halbschale (16) wurde durch Aufsetzen der die gleichfalls auf ca. 50 °C vorerhitzten oberen Halbschale (17) geschlossen und die beiden Halbschalen wurden mittels Schraubzwingen fest miteinander verbunden. Der Ueberfüllungsfaktor lag bei etwa 2,0.

f) Bei geschlossener Form (Halbschalen) wurde während 2 Stunden bei 70 °C gehärtet.

g) Die Form wurde geöffnet und das Formstück entnommen.

Das fertige Formstück wog 122 g und war allseitig mit dem Schaumstoff unmantelt.

Die folgenden Beispiele 3 bis 8 wurde mit Hilfe einer heizbaren Presse (nicht dargestellt) durchgeführt.

## Beispiel 3

a) Ein quaderförmiges Stück Polystyrol-Partikel-Hartschaumstoff mit der Dichte 0,014 g/cm³ und den Abmessungen 14,5 × 15,5 × 5 cm wurde mit zwei Lagen Glasgewebe 470 g/m² und zwei Lagen Glasvlies 40 g/m² belegt. Die Gesamthöhe des Körpers einschliesslich der Glasgewebe/Glasvliesschichten betrug ca. 5,2 cm.

b) Es wurden 20 g der folgenden Mischung zubereitet : 100 GWT Epoxydharz-Gemisch auf der Basis von epoxydiertem Bisphenol A und epoxydiertem Polypropylenglycol, 0,2 GWT Silikonöl, 1 GWT eines Treibmittels auf der Basis von Polysiloxan mit aktiven Wasserstoffatomen und 50 GWT desselben Härters wie in Beispiel 1/f. Der Schäumungsfaktor dieser Masse betrug 4,54.

c) 15 g der gemäss b) erzeugten Mischung wurden auf die Glasgewebe/Glasvliesslagen der gemäss a) erzeugten Anordnung gegossen und diese dadurch imprägniert.

d) Der Körper mit den imprägnierten Glasgewebe/Glasvliesschichten wurde in einer auf 80 °C vorgeheizten Presse auf eine Dicke von 4,9 cm zusammengepresst. (Ueberfüllungsfaktor ca. 2,6.)

e) Der Körper wurde in der Presse im zusammengepressten Zustand bei der Temperatur von 80 °C 1 Stunde und 30 Minuten lang gehärtet.

f) Die Presse wurde nach 1 Stunde und 30 Minuten geöffnet und das fertige Formstück entnommen.

Das fertige Formstück war 4,9 cm dick und wies eine gut durchimprägnierte Glasgewebe/Glasvliesschicht mit einer Dicke von ca. 1 mm auf. Der Imprägnierschaum war einige Millimeter tief in den Polystyrol-Partikel-Schaum-Kern eingedrungen. Die Haftung zwischen dem « Schaum-Laminat » (mit Schaumstoff imprägnierte Glasgewebe/Glasvliesschicht) und dem Polystyrol-Schaum-Kern war durchgehend einwandfrei.

## Beispiel 4

Ein quaderförmiges Stück Polystyrol-Partikel-Schaum der Dichte 0,015 g/cm³ wurde mit einem 2 mm dicken Rahmen mit den Innenmassen 20 cm × 15 cm aus Polytetrafluoräthylen belegt. Der Rahmen definiert auf dem Polystyrol-Schaum ein Volumen von 60 cm³ (20 × 15 × 0,2). Folgendes Schaumgemisch wurde vorbereitet :

Harz

47,5 g eines flüssigen Epoxidharzes auf der Basis von Bisphenol A und Epichlorhydrin mit einem Epoxyd-Gehalt von 5,2 Aequivalente pro Kilogramm
0,1 g eines oberflächenaktiven Mittels (Silikonöl)
2,5 g Trifluortrichloräthan (physikalisch wirkendes Treibmittel).

Härter

Bestehend aus einem beschleunigten Addukt-Härter aus :

6,09 Teile Diäthylentriamin
2,91 Teile Epoxydharz auf der Basis von Bisphenol A und Epichlorhydrin
3   Teile Bisphenol A.

Harz und Härter wurden mittels eines Schnellrührers für eine Dauer von 1 Minute gut vermischt.
Anschliessend wurden 40 g des Gemisches auf den Polystyrolschaum gegossen. Der gesamte Aufbau wurde unter eine auf 60 °C beheizten Presse gebracht und der Pressstempel (Platte) auf den Rahmen gepresst. Die anschliessende Härtung dauerte 30 Minuten. Nach dieser Zeit wurde die Presse geöffnet. Das vom Rahmen umschlossen gewesene Volumen war vollständig mit Schaum ausgefüllt.
Die Oberfläche des Schaumstoffes war frei von Lunkern und sonstigen Lufteinschlüssen.
Der Epoxydschaum war teilweise in den Polystyrolschaum eingedrungen, so das eine gute Haftung zwischen den beiden Schaumschichten vorhanden war.

Beispiel 5

Es wurde wie in Beispiel 4 vorgegangen, das gleiche Gemisch wurde eingesetzt. Die Schaummenge wurde von 40 g auf 30 g reduziert.
Nach einer halben Stunde Härtung bei 60 °C wurde ein Teil erhalten, in welchem die Epoxydschaumschicht frei von Lunkern war und eine gute Haftung zwischen den beiden Schaumschichten bestand.

Beispiel 6

30 g des Schaumgemisches von Beispiel 4 wurden auf eine zuvor mit Trennmittel behandelte dünne Aluminium-Folie gegossen.
Darauf wurden der Rahmen aus Beispiel 4 und eine Platte aus Polystyrol-Partikel-Schaumstoff aufgelegt. (Der mit der flüssigen, ungeschäumten Schaumstoffmasse bedeckte Bereich der Folie war kleiner als der Rahmen). Die so aufgebrachte Anordnung wurde in eine auf 60 °C vorgewärmte Presse gebracht und für eine Dauer von 30 Minuten geschäumt und gehärtet.
Nach dieser Zeit wurde das Muster der Presse entnommen.
Die mit Trennmittel behandelte Folie wurde abgezogen.
Das Volumen war vollständig aufgeschäumt ; es waren weder Lunker noch Lufteinschlüsse zu erkennen.
Die Verbindung vom Epoxydschaum zum Polystyrolschaum war sehr fest.

Beispiel 7

Unter den gleichen Bedingungen und nach dem gleichen Vorgehen wie in Beispiel 4 wurde folgendes Gemisch vorbereitet :

Harz

45   g eines teilfunktionellen Polyätherpolyols mit einem Molekulargewicht von 450 g wurde mittels
5   g Diphenylmethandiisocyanat leicht vorverlängert. Nach beendeter Reaktion wurde
1,2 g Wasser (deionisiert) dazu gegeben und
0,1 g eines Oberflächenmittels (Silikonöl).

Härter

30 g Diphenylmethandiisocyanat.

Mittels eines Schnellrührers wurden Harz und Härter vermischt. 30 g des Gemisches wurden auf eine

6

**0 069 076**

Polystyrol-Partikelschaum-Platte gegossen. Derselbe Rahmen wie in Beispiel 4 wurde aufgelegt und der Aufbau in die Presse gebracht.

Nach einer Härtungszeit von 60 Minuten bei 60 °C wurde das Muster entformt.

Das vom Rahmen umschlossen gewesene Volumen war komplett ausgefüllt. Der Polyurethanschaum war partiell in den Polystyrolschaum eingedrungen. Die Haftung zum Polystyrolschaum war gut.

Beispiel 8

50 g des gemäss Beispiel 7 hergestellten Harzes, in dem das Wasser durch 2 g Trichlortrifluoräthan ersetzt worden war, wurden mit 25 g Diephenylurethandiisocyanat gut vermischt. 30 g des Gemisches wurden auf eine Polystyrol-Partikelschaum-Platte gegossen. Derselbe Rahmen wie in Beispiel 4 wurde aufgelegt und der gesamte Aufbau in eine auf 60 °C erhitzte Presse gebracht.

Nach 60 Minuten Härtung wurde das Muter entformt.

Der Polystyrol-Schaum war mit einer Polyurethanschaumschicht bedeckt. Die Polyurethanschaumschicht war frei von Lunkern und die Haftung zwischen Polyurethan und Polystyrol-Schaum war gut.

Bezugszeichenliste

| | |
|---|---|
| 1 | Hartschaum-Kern |
| 2 | Hartschaum-Tragschicht |
| 2f | Schäumbare Masse in flüssigem Zustand |
| 2n | Niveau von 2f |
| 3 | Ueberzug |
| 10 | Giessformunterteil |
| 11 | Giessformoberteil (Deckel) |
| 12 | Fülleitung |
| 14 | Entlüftungs- und Ueberströmleitung |
| 13 und 15 | Absperrventile |
| 16 und 17 | Halbschalen eines Formwerkzeuges |
| La | Aussenlänge |
| Ba | Aussenbreite |
| Ha | Aussenhöhe |
| Lit | Innenlänge an der Trennfuge |
| Lib | Innenlänge am Boden |
| Bit | Innenbreite an der Trennfuge |
| Bib | Innenbreite am Boden |
| Hi | Innenhöhe |

**Patentansprüche**

1. Verfahren zur Herstellung eines Verbundkörpers, insbesondere Wind-Surfbrettes oder ähnlichen Schwimmkörpers, mit einem sehr leichten Kunststoff-Hartschaumkern und einer Tragschicht aus hartem Kunststoffschaum höherer Dichte, dadurch gekennzeichnet, dass man

a) für den Kunststoff-Hartschaumkern ein Material mit kapillarer Struktur, z. B. Polystyrol-Partikel-Schaumstoff wählt,

b) den Hartschaumkern vorfertigt, z. B. aus einem grösseren Stück herausschneidet,

c) den vorgefertigten Kunststoff-Hartschaumkern und die zur Bildung der Tragschicht bestimmte Schaumstoffmasse in ungeschäumtem flüssigem Zustand in eine Giessform einbringt, die um die Dicke der Tragschicht grösser ist als der Hartschaumkern, wobei man das Volumen der ungeschäumten Masse grösser wählt als die Volumendifferenz zwischen Giessform-Hohlraum und Hartschaumkern dividiert durch den Schäumungsfaktor der Schaumstoffmasse, wobei der Schäumungsfaktor durch das Verhältnis des Volumens der frei, das heisst bei Atmosphärendruck geschäumten Masse zu demjenigen der ungeschäumten Masse definiert ist,

d) die Giessform zumindest solange geschlossen und auf Härtungstemperatur hält, bis die Schaumstoffmasse ausgeschäumt ist und einen formstabilen Zustand erreicht hat.

2. Verfahren gemäss Anspruch 1, dadurch gekennzeichnet, dass man das Volumen der ungeschäumten Schaumstoffmasse um das etwa 1,2 bis 10-fache, vorzugsweise 2 bis 5-fache grösser wählt als die Volumen-differenz zwischen dem Giessform-Hohlraum und dem Hartschaumkern dividiert durch den Schäumungsfaktor.

3. Verfahren gemäss Anspruch 1 oder 2, dadurch gekennzeichnet, dass man die Schaumstoffmasse bezüglich des Schäumungsfaktors so einstellt, dass dieser 1,5 bis 30, vorzugsweise 3 bis 10 beträgt.

4. Verfahren gemäss einem der vorangehenden Ansprüche, dadurch gekennzeichnet, dass man einen Teil der zur Bildung der Tragschicht bestimmten Menge fliessfähiger Schaumstoffmasse in den Unterteil der Giessform einfüllt und den zweiten Teil auf den Kern aufgiesst, bevor oder nachdem man diesen in die Form einlegt.

7

5. Verfahren gemäss einem der vorangehenden Ansprüche, dadurch gekennzeichnet, dass man die Giessform als Deckschicht am Verbundkörper belässt.

6. Verfahren gemäss einem der vorangehenden Ansprüche, dadurch gekennzeichnet, dass man eine Schicht Verstärkungsfasern und/oder Verstärkungsgewebe in die Giessform einlegt, dort mit einer härtbaren Kunststoffmasse imprägniert, die Imprägniermasse härtet, so dass ein Laminat entsteht, und dass man den vorgefertigten Hartschaumkern sowie die zur Bildung der Tragschicht bestimmte flüssige Schaumstoffmasse in die so ausgekleidete Giessform einbringt, so dass nach dem Schäumen und Härten der letztgenannten Masse diese die Tragschicht und das Laminat die äussere Deckschicht bildet.

7. Verfahren gemäss einem der vorangehenden Ansprüche, dadurch gekennzeichnet, dass man eine Schicht Verstärkerfasern und/oder Verstärkergewebe auf den vorgefertigten Kern fixiert und zumindest einen Teil der zur Bildung der Tragschicht bestimmten flüssigen Schaumstoffmasse in ungeschäumtem Zustand auf diese Schicht appliziert, und dass man den so vorbereiteten Kern in die Giessform einlegt nachdem man gegebenenfalls in diese den zweiten Teil der Schaumstoffmasse in gleichfalls ungeschäumtem Zustand eingebracht hat.

8. Verfahren gemäss einem der vorausgehenden Ansprüche, dadurch gekennzeichnet, dass man den Kern während des Aufschäumens und Aushärtens der zur Bildung der Tragschicht bestimmten Schaumstoffmasse in dieser im wesentlichen frei schwimmen lässt.

9. Verfahren gemäss einem der vorangehenden Ansprüche, dadurch gekennzeichnet, dass man als Schaumstoffmasse ein Epoxydharz mit einem vorzugsweise chemischen Treibmittel wählt.

## Claims

1. Process for the preparation of a composite body, in particular a wind surfboard or a similar floating body, with a very light synthetic plastic hard foam core and a supporting layer of a hard synthetic plastic foam with a higher density, characterized in that

a) for the synthetic plastic hard foam core a material with a capillary structure, for example polystyrene particle foam, is selected,

b) the hard foam core is prefabricated, for example cut from a larger piece,

c) the prefabricated synthetic plastic hard foam core and the foaming mass intended for the formation of the supporting layer is introduced in the unfoamed, liquid state into a casting mold that is larger by the thickness of the supporing layer than the hard foam core, with the volume of the unfoamed mass being chosen larger than the volume difference between the cavity of the casting mold and the hard foam core divided by the foaming factor of the foaming mass, wherein the foaming factor is defined by the ratio of the volume of the mass, i. e. the mass foamed under atmospheric pressure to the volume of the unfoamed mass,

d) the casting mold is maintained closed and at the hardening temperature at least until the foaming mass is fully foamed and has attained a dimensionally stable state.

2. Process according to Claim 1, characterized in that the volume of the unfoamed foaming mass is chosen approximately 1.2 to 10 times, preferably 2 to 5 times, larger than the difference in volume between the cavity of the casting mold and the hard foam core, divided by the foaming factor.

3. Process according to Claim 1 or 2, characterized in that the foaming is adjusted with respect to the foaming factor so that the latter amounts to 1.5 to 30, preferably 3 to 10.

4. Process according to one of the preceding claims, characterized in that part of the volume of the flowable foaming mass intended for the formation of the supporting layer is filled into the bottom part of the casting mold and the second part poured onto the core, before or after the latter is placed into the mold.

5. Process according to one of the preceding claims, characterized in that the casting mold is retained on the composite body as a cover layer.

6. Process according to one of the preceding claims, characterized in that a layer of reinforcing fibers and/or reinforcing fabric is placed into the casting mold, impregnated therein with a hardenable synthetic plastic mass, the impregnating mass hardened, thereby forming a laminate, and that the prefabricated hard foam core and the liquid foaming mass intended for the formation of the supporting layer is introduced into the casting mold lined in this manner, so that following the foaming and hardening of the latter mass, it forms the supporting layer and the laminate the outer cover layer.

7. Process according to one of the preceding claims, characterized in that a layer of reinforcing fibers and/or a reinforcing fabric is attached to the prefabricated core and at least part of the liquid foaming mass intended to form the supporting layer is applied to said layer, and that the core prepared in this manner is placed into the casting mold, after optionally the second part of the foaming mass has been introduced, again in the unfoamed state.

8. Process according to one of the preceding claims, characterized in that the core is being allowed to float in an essentially free manner in the foaming mass intended to form the supporting layer, during the foaming and hardening of said foaming mass.

9. Process according to one of the preceding claims, characterized in that an epoxy resin, preferably with a chemical driving agent, is chosen as the foaming mass.

**0 069 076**

**Revendications**

1. Procédé de préparation d'un corps composite, en particulier d'une planche à voile ou d'un corps flottant analogue, possédant une âme en mousse rigide de matière plastique, très légère, et une peau ou couche support, en une mousse de matière plastique rigide ayant une densité plus élevée, caractérisé en ce que

a) on sélectionne pour l'âme en mousse rigide de matière plastique un matériau à structure capillaire, par exemple une mousse de particules de polystyrène,

b) on préfabrique l'âme en mousse rigide, par exemple en la découpant à partir d'une pièce de plus grandes dimensions,

c) on introduit l'âme en mousse rigide de matière plastique préfabriquée et la matière de mousse destinée à la formation de la couche support, à l'état liquide non-expansé, dans un moule de coulée, qui est plus grand, de l'épaisseur de la couche support, que l'âme en noyau rigide, en choisissant le volume de la matière non-expansée plus grand que la différence de volume entre la cavité du moule de coulée et l'âme en mousse rigide divisée par le facteur d'expansion de la matière de mousse, le facteur d'expansion étant défini par le rapport entre le volume de la matière librement expansée, c'est-à-dire à la pression atmosphérique, et le volume de la matière non-expansée,

d) on ferme le moule de coulée, et on le maintient à la température de durcissement, au moins jusqu'à ce que la matière de mousse soit expansée et ait atteint un état dimensionnellement stable.

2. Procédé selon la revendication 1, caractérisé en ce qu'on choisit pour le volume de la matière de mousse non expansée une valeur environ 1,2 à 10 fois, de préférence 2 à 5 fois plus importante que la différence de volume entre la cavité du moule de coulée et l'âme en mousse rigide divisée par le facteur d'expansion.

3. Procédé selon la revendication 1 ou 2, caractérisé en ce qu'on ajuste la matière de mousse, pour ce qui est du facteur d'expansion, de façon que ce dernier soit de 1,5 à 30, de préférence de 3 à 10.

4. Procédé selon l'une des revendications 1 à 3, caractérisé en ce qu'on introduit dans la partie inférieure du moule de coulée une partie de la quantité de la matière de mousse fluide destinée à la formation de la couche support, et qu'on verse la deuxième partie sur l'âme, avant ou après l'introduction de cette dernière dans le moule.

5. Procédé selon l'une des revendications 1 à 4, caractérisé en ce que le moule de coulée reste en tant que couche de couverture du corps composite.

6. Procédé selon l'une des revendications 1 à 5, caractérisé en ce qu'on introduit une couche de fibres de renforcement et/ou de tissu de renforcement dans le moule de coulée, qu'on l'y imprègne d'une matière plastique durcissable, qu'on durcit la matière d'imprégnation, de façon à créer un stratifié, et que l'on introduit dans le moule de coulée ainsi revêtu l'âme en mousse rigide préfabriquée ainsi que la matière de mousse liquide destinée à la formation de la couche support, de façon que, après expansion et durcissement de cette matière de mousse, cette dernière forme la couche de support, et le stratifié forme la couche de couverture extérieure.

7. Procédé selon l'une des revendications 1 à 6, caractérisé en ce qu'on fixe une couche de fibres de renforcement et/ou de tissu de renforcement sur l'âme préfabriquée, et qu'on applique sur cette couche au moins une partie de la matière de mousse liquide, à l'état non-expansé, destinée à la formation de la couche support, et qu'on introduit l'âme ainsi préfabriquée dans le moule de coulée après que l'on a éventuellement introduit dans cette dernière la deuxième partie de la matière de mousse, elle aussi à l'état non-expansé.

8. Procédé selon l'une des revendications 1 à 7, caractérisé en ce qu'on laisse l'âme, pendant l'expansion et le durcissement de la matière de mousse destinée à la formation de la couche support, flotter d'une manière essentiellement libre dans cette matière de mousse.

9. Procédé selon l'une des revendications 1 à 8, caractérisé en ce qu'on choisit en tant que matière de mousse une résine époxyde, avec un agent porogène de préférence chimique.

9

Fig.1

Fig.3

Fig.4

Fig.2a

Fig.2b

Fig.2bb

Fig.2c

Fig.2d

Fig.2e

Fig.2F